# EUROPÄISCHE PATENTSCHRIFT

(11) **EP 2 696 184 B1**
(45) Veröffentlichungstag und Bekanntmachung des Hinweises auf die Patenterteilung: **23.10.2019**
(21) Anmeldenummer: 13002859.0
(22) Anmeldetag: 04.06.2013
(51) Int. Cl.: G01M 5/00, G01N 29/11, G01M 7/00, G01N 29/04, G01N 29/24

(54) **Verfahren zur Identifikation lokaler Werkstoffdämpfung in Verbund-Strukturen**
Method for identifying local damping in composite structures
Procédé d'identification de l'atténuation locale dans des structures composites

(30) Priorität: 13.06.2012 DE 102012011927
(43) Veröffentlichungstag der Anmeldung: 12.02.2014
(73) Patentinhaber: Technische Universität Dresden, 01069 Dresden (DE)
(72) Erfinder: Kostka, Pawel, 01307 Dresden (DE); Holeczek, Klaudiusz, 01067 Dresden (DE); Hufenbach, Werner, 01324 Dresden (DE); Langkamp, Albert, 01324 Dresden (DE)
(74) Vertreter: Rauschenbach, Marion

(56) Entgegenhaltungen:
- WO-A1-2010/102208
- GB-A- 2 475 225
- US-A- 5 814 729
- OGI H ET AL: "Internal-friction mapping on solids by resonance ultrasound microscopy", APPLIED PHYSICS LETTERS, A I P PUBLISHING LLC, US, Bd. 88, Nr. 14, 6. April 2006 (2006-04-06) , Seiten 141110-141110, XP012080911, ISSN: 0003-6951, DOI: 10.1063/1.2194479

## Beschreibung

Die Erfindung betrifft ein Verfahren zur Identifikation lokal verteilter Werkstoffdämpfung in Verbund-Strukturen, die insbesondere bei der Inspektion, Wartung oder Instandhaltung von Leichtbau-Komponenten, die Werkstoffe mit hohen mechanischen Anforderungen aufweisen, wie beispielsweise der Außenhaut von Flugkörpern, eingesetzt werden kann.

Die Erfindung betrifft des Weiteren ein Verfahren zur experimentellen Bestimmung inhomogen verteilter Werkstoffdämpfung. Speziell bei Verbundwerkstoffen, die in der Regel aus einem viskoelastischen Matrixmaterial und darin eingebetteten Fasern, wie beispielsweise Kohlenstofffasern oder Glasfasern bestehen, gibt es vielfältige Mechanismen und Verfahren zur Bestimmung der Werkstoffdämpfung.

Unter Werkstoffdämpfung wird die durch örtlich und zeitlich bewirkte Energiedissipation im viskoseelastischen Matrixmaterial, im elastischen Fasermaterial und an den Materialgrenzen und Übergängen, die wiederum durch fertigungstechnische Besonderheiten wie Fehlstellen, Einschlüsse, Beugung und Schlichte gekennzeichnet sind. Darüber hinaus kommt es infolge der Bauteilbeanspruchung im Regelbetrieb und besonders bei lokalen Schadensereignissen, wie beispielsweise Stoßereignissen ohne Totalschaden, zu einer Veränderung der lokalen Werkstoffdämpfung.

Bei Werkstoffen, die hohen mechanischen Belastungen ausgesetzt sind, werden diagnostische Systeme angewendet, die basierend auf zustandssensitive messbare Größen die Schädigung ermitteln.

Die Zuverlässigkeit der getroffenen Diagnose hängt stark mit der richtigen Auswahl schädigungsabhängiger Eingangsgrößen zusammen. Als eine dieser zustandssensitiven Größen ist die Bestimmung der Werkstoffdämpfung allgemein bekannt.

Die betriebsrelevanten schädigungsinduzierten Änderungen der Dämpfungscharakteristik treten meist lokal auf, welches eine lokale und anisotrope Veränderung der Werkstoffdämpfung verursacht.

Bei der Verwendung der lokalen Werkstoffdämpfung als diagnostische Eingangsgröße besteht das Hauptproblem in der Bestimmung der Werkstoffdämpfung mit ausreichender Orts- und Richtungsauflösung.

Herkömmlich ist für die experimentelle Bestimmung nur eine Messmethode der ortsaufgelösten Werkstoffdämpfung bekannt. Diese Methode basiert auf dem Prinzip der Wellenausbreitung. Diese Methode ist weiter als "spatial attenuation" bekannt [Lindsay, R.; 1951; Spatial and Temporal Attenuation and Dispersion of Sound; The Journal oft he Acoustical Society of America; 23, 628]. Dabei wird eine laufende harmonische Schwingung in einem langen Probekörper durch einen Aktuator erzeugt. Bei einer definierten Entfernung vom Aktuator wird die Amplitude der laufenden Welle mittels eines entsprechenden Sensors gemessen. Die aus der Werkstoffdämpfung resultierende Veränderung der Wellenamplitude wird gespeichert und entsprechend physikalisch gedeutet.

Nach der GB 2 475 225 A ist ein Verfahren zur Untersuchung und insbesondere Strukturuntersuchung von verbundenen Vorrichtungen, wie Pipelines, bekannt. Es werden Wellen von einem Sender ausgehend durch die Pipeline-Materialien in einer Richtung zu einem Empfänger gesandt und durch eine Vielzahl von Sensoren an verschiedenen Stellen der Pipeline die Werkstoffdämpfung über dem Abstand zwischen Sender und Empfänger gemessen.

Weiter ist aus der US 5 814 729 A ein System zur In-situ-Delaminations-Untersuchung in Compositen bekannt, bei dem mindestens ein mechanischer Aktuator und mindestens zwei Delaminationssensoren vorhanden sind, zwischen denen Wellen ausgesandt und empfangen werden.

Nachteilig bei den bekannten Lösungen ist die Erfassung der örtlichen Dämpfung zum einen durch die Veränderung der Sensorposition, wobei die Messprozedur wegen der ständigen Positionswechsel des Sensors sehr zeit- und arbeitsintensiv ist.

Die Erfassung der örtlichen Dämpfung kann weiter durch die Bestückung des Probekörpers mit mehreren Sensoren erfolgen, wobei die Anzahl der Sensoren den Dämpfungswert des zu messenden Werkstoffs beeinflusst und damit die Messung einem größeren Fehler unterliegt.

Darüberhinaus kommt es infolge der Bauteilbeanspruchung im Regelbetrieb und besonders bei lokalen Schadensereignissen, zum Beispiel bei Stoßereignissen ohne Totalschaden, zu einer Veränderung der lokalen Werkstoffdämpfung.

Aufgabe der Erfindung ist es deshalb, ein Verfahren zur Messung lokaler Werkstoffdämpfung so weiter zu bilden, dass eine Bestimmung der lokalen Werkstoffdämpfung ermittelt werden kann, die mit geringem Zeitaufwand und unter nicht-invasiven Bedingungen nutzbar ist.

Erfindungsgemäß wird diese Aufgabe durch ein Verfahren entsprechend dem Patentanspruch 1 gelöst.

Die Unteransprüche 2 bis 7 erläutern vorteilhafte Ausführungsformen der Erfindung.

Das Verfahren basiert auf dem Einsatz einer verstimmbaren, quasi stehenden mechanischen Schwingung, die durch eine definierbare Veränderung der Position des Wellenberges, den Anteil der Dämpfung von ausgewählten Werktstoffbereichen verändert.

Vorteilhaft an dem erfindungsgemäßen Verfahren ist die unkomplizierte, störungsarme und mit geringem Zeitaufwand verbunden Durchführung des Messverfahrens bei gleichzeitiger hoher Orts- und Richtungsabhängigkeit. Dabei sollen die Dämpfungseigenschaften in Bauteilen, insbesondere aus Verbundwerkstoffen eingeschätzt und bestimmt werden. Es muss qualitativ lokalisiert werden, wo und wie viel Dämpfung stattgefunden hat. Des Weiteren wird die Größe der Dämpfung analysiert und die zeitliche Veränderung der Dämpfung gemessen. Dadurch kann ein progressives Rißwachstum im Inneren des zu messenden Bauteils festgestellt werden.

Das Verfahren stellt sicher, dass eine zerstörungsfreie Identifikation der Bauteile erfolgt.

Voraussetzung für die Energiedissipetion und damit für das "Sichtbarmachen" der Dämpfung sind zeitlich veränderliche Verformungen, in Form von Schwingungen beziehungsweise Wellen und die Messung relevanter physikalischer Größen, zum Beispiel die lokale Temperatur, Laufzeiten, Ausbreitungsgeschwindigkeit oder die lokale Schwingungsamplitude.

Zur Erzeugung von Schwingungen können verschiedene Aktuatoren aus adaptiven Materialien verwendet werden. Insbesondere Piezomaterialien eignen sich gut zur Einbettung in Faserkomposite, das heißt zur Einbettung in Werkstoffe aus verbundenen Materialien.

Mittels des piezoelektronischen Effektes kann eine mechanische Verformung durch ein elektrisches Feld erzeugt werden. Je nach Ausprägung und Polarisation können unterschiedliche mechanische Verformungen erzeugt oder detektiert werden.

Weiterhin vorteilhaft ist die Möglichkeit der Online-Überwachung. Der Körper aus dem zu messenden Werkstoff kann online während seines Einsatzes auf Werkstoffänderungen geprüft werden. Zeitlich aufwändige Stillstände für Inspektionen oder Wartungen können vermindert oder sogar vermieden werden.

Das erfindungsgemäße Verfahren soll nachstehend an einigen Ausführungsbeispielen näher erläutert werden:
Fig. 1 den prinzipiellen Funktionsaufbau bei einem eindimensionalen Körper,
Fig. 2 das Dämpfungsprofil für eine gleichmäßige Verteilung der Dämpfung entlang der Strecke zwischen den zwei Aktuatoren,
Fig. 3 den Verlauf des Mittelwertes der aufgezeichneten Signale für das Dämpfungsprofil mit gleichmäßiger Verteilung der Dämpfung entlang der Strecke zwischen den zwei Aktuatoren,
Fig. 4 das Dämpfungsprofil für eine lokale erhöhte Dämpfung entlang der Strecke zwischen den zwei Aktuatoren,
   und
Fig. 5 den Verlauf des Mittelwertes der aufgezeichneten Signale für das Dämpfungsprofil für eine lokale erhöhte Dämpfung entlang der Strecke zwischen den zwei Aktuatoren.

### Beispiel 1:

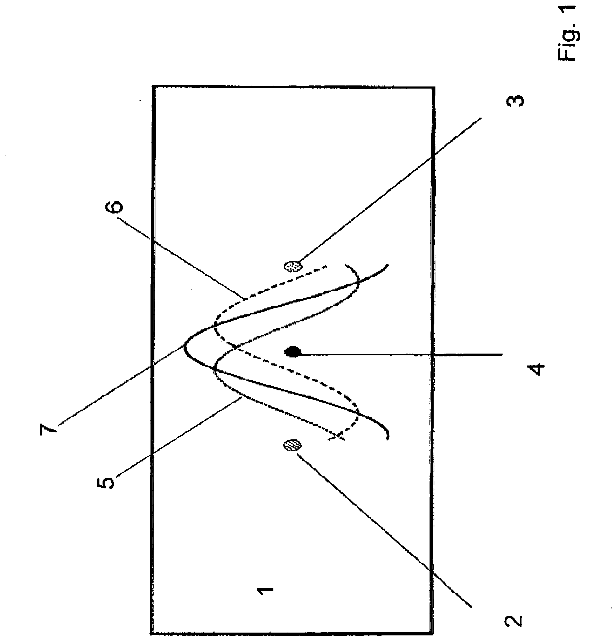

Anhand von Fig. 1 ist ein Körper 1 ersichtlich, der an zwei Positionen Aktuatoren 2, 3 für die Schwingungen 5, 6 aufweist und zwischen diesen Aktuatoren 2, 3 ein Sensor 4 positioniert ist. Beide Aktuatoren 2, 3 senden jeweils eine Schwingung 5, 6 aus, die dabei entstehende, stehende Welle 7 wird vom Sensor 4 gemessen.

### Beispiel 2:

In einem Körper 1 aus in einer Polymermatrix eingebetteten Glasfasern sind zwei positionierte Aktuatoren 2 und 3 und
ein Sensor 4 nach Fig. 1 eingebracht, die auf den jeweilig anderen Aktuator eine mechanische Schwingung 5 und 6 gleicher Amplitude und Wellenlänge aussenden. Durch die Interferenz beider Wellen 5 und 6 entsteht eine stehende Welle 7 im Körper 1.

### Beispiel 3:

Ist in dem Körper 1 wie in Beispiel 2 eine Fehlstelle vorhanden, ist ein Schaden an der Leichtbaukomponente ermittelt. So reiben beispielsweise bei Einsatz von Glasfaserwerkstoffen, die geprüft werden sollen, bei Schwingungen gebrochene Glasfasern aneinander, erzeugen damit Wärme und erhöhen die Dämpfung an dieser Fehlstelle. Damit verändert sich der Schwingungsverlauf von 5 und 6 und somit resultierend auch von 7. Die ankommenden Schwingungen werden vom Sensor 3 aufgenommen und verarbeitet

Anhand dieser Dämpfung wird die Fehlstelle rechentechnisch lokalisiert, indem die dissipierte Energie der stehenden Welle 7 gewichtet wird. Aus dieser Angabe können wiederum eine Abschätzung des Schädigungszustandes und der Ort der Schädigung des Körpers 1 erfolgen.

### Beispiel 4:

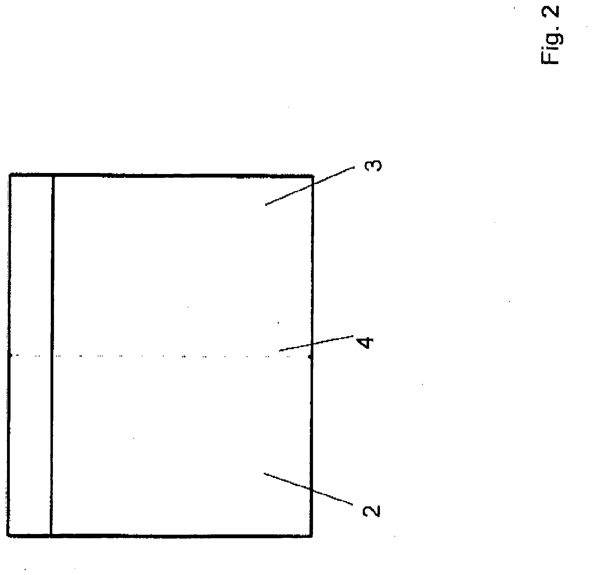

Anhand von Fig. 2 wird eine gleichmäßige Verteilung der Dämpfung entlang der Strecke zwischen den Aktuatoren 2 und 3 mit dem Aufbau aus Fig. 1 ersichtlich.

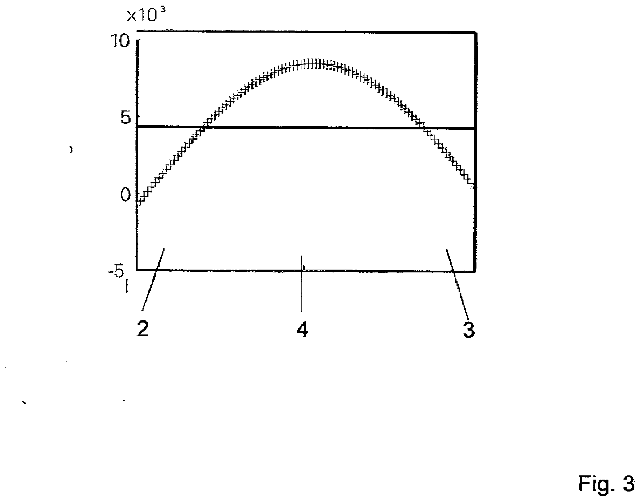

Zwei Schwingungen 5 und 6 werden von den Aktuatoren 2 und 3 angeregt, die Leichtbaukomponente weist keine Fehlstelle
auf, die Dämpfung verläuft gleichmäßig, die aufgenommenen Signale des Sensors 4 werden im Diagramm der Figur 3 dargestellt.

### Beispiel 5:

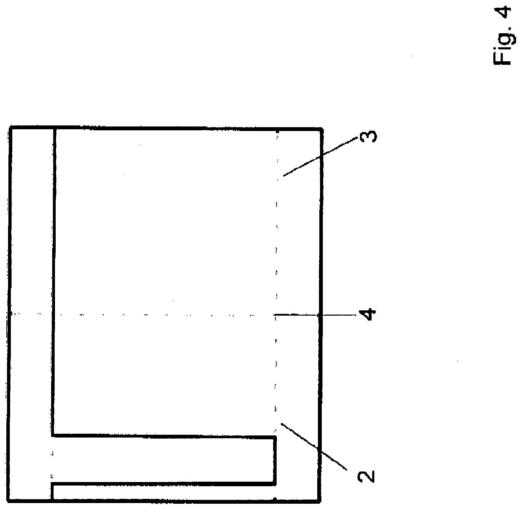

Anhand von Fig. 4 wird eine lokale erhöhte Dämpfung entlang der Strecke zwischen den Aktuatoren 2 und 3 mit dem Aufbau aus Fig. 1 ersichtlich.

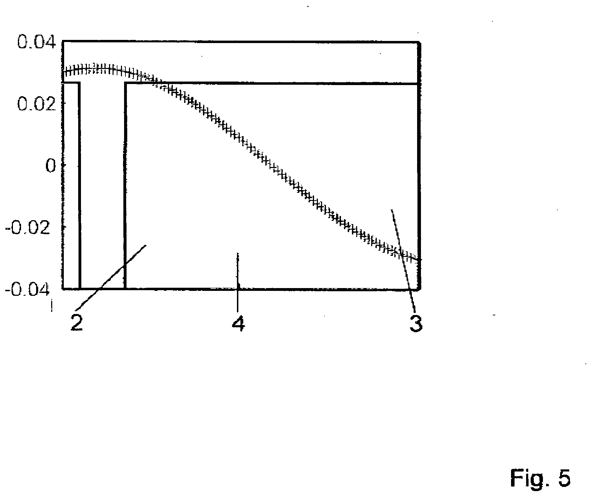

Zwei Schwingungen 5 und 6 werden von den Aktuatoren 2 und 3 angeregt, der Körper weist eine Fehlstelle auf, wodurch die lokale Dämpfung hervorgerufen wird. Die aufgenommenen Signale des Sensors 4 werden im Diagramm der Figur 5 dargestellt.

### Beispiel 6:

In einem Körper 1 aus in einer Polymermatrix eingebetteten Glasfasern sind zwei positionierte Aktuatoren 2 und 3 und ein Sensor 4 nach Fig. 1 eingebracht, die auf den jeweilig anderen Aktuator eine mechanische Schwingung 5 und 6 aussenden. Die Anfangsphase und -amplitude der propagierenden Schwingungen 5 und 6 werden stufenlos verändert, so dass sich die Position des Wellenbauches auf Höhe des Sensors 4 befindet.

## Patentansprüche

1. Verfahren zur Messung lokaler Werkstoffdämpfung in Verbund-Strukturen, das insbesondere bei der Inspektion, Wartung oder Instandhaltung von Leichtbaukomponenten, die Werkstoffe mit hohen mechanischen Anforderungen aufweisen, wie der Außenhaut von Flugkörpern, eingesetzt wird, **dadurch gekennzeichnet, dass** mindestens mittels zwei Aktuatoren (2, 3) eine verstimmbare, quasi stehende mechanische Schwingung (7) in einer Leichtbaukomponente (1) erzeugt, eine definierbare Veränderung der Position des Wellenberges realisiert, und aus den durch Sensoren ermittelten Messwerten die Verteilung der Dämpfung im ausgewählten Werkstoffbereich mit Orts- und Richtungsauflösung bestimmt wird.

2. Verfahren nach Anspruch 1, **dadurch gekennzeichnet, dass** zwei Schwingungen (5, 6) in der Leichtbaukomponente (1) erzeugt, gemessen und die Dämpfung im zu prüfenden Werkstoff der Leichtbaukomponente (1) mit Orts- und Richtungsauflösung bestimmt wird.

3. Verfahren nach Anspruch 1 und 2, **dadurch gekennzeichnet, dass** als Werkstoff der Leichtbaukomponente (1) ein Kunststoffmaterial verwendet wird.

4. Verfahren nach Anspruch 3, **dadurch gekennzeichnet, dass** als Kunststoffmaterial ein kohlenstofffaserverstärktes Kunststoffmaterial oder glasfaserverstärktes Kunststoffmaterial verwendet wird.

5. Verfahren nach Anspruch 1 und wenigstens einem der Ansprüche 2 bis 4, **dadurch gekennzeichnet, dass** mindestens eine Schwingung (5 oder 6) von einem Sensor (4) in oder an der Leichtbaukomponente (1) gemessen wird und die mindestens eine erzeugte Schwingung (5 oder 6) so modifiziert wird, dass eine quasi stehende Welle (7) entsteht, die der Sensor (4) misst.

6. Verfahren nach Anspruch 1 und wenigstens einem der Ansprüche 2 bis 5, **dadurch gekennzeichnet, dass** eine rechentechnische Einrichtung einen Messwert des Sensors (4) auswertet und den Ort, die Richtung und/oder die Intensität einer Schädigung des zu prüfenden Werkstoffs in oder an der Leichtbaukomponente (1) errechnet.

7. Verfahren nach Anspruch 1 und wenigstens einem der Ansprüche 2 bis 6, **dadurch gekennzeichnet, dass** ein Sensor (4) örtlich zwischen Aktuatoren (2, 3) wirkt.

## Claims

1. Method for measuring local damping of material in composite structures, which is used in particular in the inspection, servicing or maintenance of lightweight components that comprise materials with high mechanical requirements, such as the outer skin of flying objects, **characterized in that**, at least by means of two actuators (2, 3), a detunable, quasi-standing wave mechanical vibration (7) is produced in a lightweight component (1) by means of at least two actuators (2, 3), a definable change in the position of the wave crest is realized, and from the measured values determined by sensors the distribution of the damping in the selected region of material is determined with spatial and directional resolution.

2. Method according to Claim 1, **characterized in that** two vibrations (5, 6) are generated in the lightweight component (1), measured and the damping in the material to be tested of the lightweight component (1) is determined with spatial and directional resolution.

3. Method according to Claims 1 and 2, **characterized in that** a plastics material is used as the material of the lightweight component (1).

4. Method according to Claim 3, **characterized in that** a carbon-fibre-reinforced plastics material or glass-fibre-reinforced plastics material is used as the plastics material.

5. Method according to Claim 1 and at least one of Claims 2 to 4, **characterized in that** at least one vibration (5 or 6) is measured by a sensor (4) in or on the lightweight component (1) and the at least one vibration (5 or 6) generated is modified so as to produce a quasi-standing wave (7), which the sensor (4) measures.

6. Method according to Claim 1 and at least one of Claims 2 to 5, **characterized in that** a computational device evaluates a measured value of the sensor (4) and calculates the location, the direction and/or the intensity of damage to the material to be tested in or on the lightweight component (1).

7. Method according to Claim 1 and at least one of Claims 2 to 6, **characterized in that** a sensor (4) acts locally between actuators (2, 3).

## Revendications

1. Procédé de mesure de l'amortissement local par des matériaux dans des structures composites, qui est en particulier utilisé pour l'inspection, l'entretien ou la maintenance de composants légers comportant des matériaux présentant des exigences mécaniques élevées, tels que la coque extérieure de missiles, **caractérisé en ce qu'**au moyen d'au moins deux actionneurs (2, 3), une oscillation mécanique quasi stationnaire dont l'accord est modifiable (7) est générée dans un composant léger (1), **en ce qu'**une modification définissable de la position de la crête des ondes est réalisée, et **en ce qu'**à partir des valeurs de mesure déterminées par des capteurs, la distribution des atténuations dans la zone sélectionnée est déterminée de manière résolue spatialement et en direction.

2. Procédé selon la revendication 1, **caractérisé en ce que** deux oscillations (5, 6) sont générées et mesurées dans le composant léger (1) et **en ce que** l'atténuation dans le matériau du composant léger (1) à tester est déterminée de manière résolue spatialement et en direction.

3. Procédé selon les revendications 1 et 2, **caractérisé en ce qu'**une matière plastique est utilisée en tant que matériau du composant léger (1).

4. Procédé selon la revendication 3, **caractérisé en ce qu'**une matière plastique renforcée par des fibres de carbone ou une matière plastique renforcée par des fibres de verre est utilisée en tant que matière plastique.

5. Procédé selon la revendication 1 et au moins l'une des revendications 2 à 4, **caractérisé en ce qu'**au moins une oscillation (5 ou 6) est mesurée par un capteur (4) dans ou sur le composant léger (1) et **en ce que** ladite au moins une oscillation (5 ou 6) générée est modifiée de manière à produire une onde quasi-stationnaire (7) qui est mesurée par le capteur (4).

6. Procédé selon la revendication 1 et au moins l'une des revendications 2 à 5, **caractérisé en ce qu'**un dispositif de calcul évalue une valeur de mesure du capteur (4) et calcule la position, la direction et/ou l'intensité d'un endommagement du matériau à tester dans ou sur le composant léger (1).

7. Procédé selon la revendication 1 et au moins l'une des revendications 2 à 6, **caractérisé en ce qu'**un capteur (4) agit localement entre des actionneurs (2, 3).
